# EUROPEAN PATENT APPLICATION

(11) **EP 1 298 554 A1**
(43) Date of publication of application: **02.04.2003**
(21) Application number: 01926010.8
(22) Date of filing: 27.04.2001
(51) Int. Cl.: G06F 17/60, G10L 19/00

(54) **AUDIO DISTRIBUTING SYSTEM INVOLVING SYNTHESIS AND AUDIO DISTRIBUTING SYSTEM INVOLVING CHARGING**

(30) Priority: 28.04.2000 JP 2000130457
(71) Applicant: MATSUSHITA ELECTRIC INDUSTRIAL CO., LTD., Kadoma-shi, Osaka 571-8501 (JP)
(72) Inventor: KOBAYASHI, Hideaki, Kobe-shi Hyogo 651-0073 (JP); TSUDA, Kenjiro, Hirakata-shi Osaka 573-0075 (JP); NISHIGORI Yoshihisa, Ikeda-shi Osaka 563-0028 (JP)
(74) Representative: Balsters, Robert
(86) International application number: JP0103684
(87) International publication number: WO01084406

(57) **Abstract**

According to a system in which information is distributed from an information distribution device to an information reception device on the basis of selection information indicating one or more pieces of sound information which is selected from plural pieces of sound information, the information distribution device creates a composite sound data file in which plural sound data files including a sound data file which is real data of the selected sound information are edited and composited to create a single sound contents, and distributes the composite sound data file to the information reception device.

Thereby, an information distribution system that enables a user to enjoy contents constituted by desired information, with a simple reproducer, can be realized.

## Description

### TECHNICAL FIELD

The present invention relates to a sound information distribution system and a sound information distribution device for distributing sound information by using the Internet or the like, and a sound reproducer for reproducing sounds from the distributed sound information.

### BACKGROUND ART

As an information service using the Internet, a mail magazine which is a character information service employing electronic mails has rapidly become prevalent.

However, since contents of this mail magazine system are character information using e-mails, this information cannot be displayed unless employing an information terminal equipped with a display screen, such as a personal computer. Further, it is difficult for users to get the information while taking another action at the same time.

The present invention is made to solve the above-described problems and has for its object to provide an information distribution system which enables users to enjoy contents constituted by desired information, with a simple reproducer. Further, the present invention has for its object to provide a new information service that supplies sound information through the Internet.

### DISCLOSURE OF THE INVENTION

To solve the above-described problems, according to Claim 1 of the present invention, there is provided an information distribution system for distributing information from an information distribution device to an information reception device on the basis of selection information indicating one or more pieces of sound information which are selected from plural pieces of sound information, in which the information distribution device creates a composite sound data file which is obtained by editing and compositing plural sound data files including a sound data file which is real data of the selected sound information, to create a single sound contents, and distributes the composite sound data file to the information reception device.

Therefore, it is possible to realize an information distribution system which enables a user to enjoy contents constituted by desired information, with a simple reproducer.

According to Claim 2 of the present invention, there is provided an information distribution system for distributing information from an information distribution device to an information reception device on the basis of selection information indicating one or more pieces of sound information which are selected from plural pieces of sound information, in which the information distribution device creates a composite sound data file which is obtained by editing and compositing plural sound data files including a sound data file which is real data of the selected sound information, to create a single sound contents, as well as distributes access information for the composite sound data file to the information reception device.

Therefore, it is possible to realize an information distribution system which enables a user to enjoy contents constituted by desired information, with a simple reproducer, and has a small burden on a communication system.

According to Claim 3 of the present invention, there is provided an information distribution system for distributing information from an information distribution device to an information reception device on the basis of selection information indicating one or more pieces of sound information which are selected from plural pieces of sound information, in which the information distribution device creates editing information for editing and compositing plural sound data files including a sound data file which is real data of the selected sound information, to create a single sound contents, and distributes the editing information and the plural sound data files to the information reception device dividedly in plural number of times, and the information reception device receives the editing information and the plural sound data files, and edits and composites the received plural sound data files on the basis of the received editing information to create one composite sound data file which is reproducible as a single sound contents.

Therefore, it is possible to realize an information distribution system which enables a user to enjoy contents constituted by desired information, with a simple reproducer, and has a small burden on a communication system.

According to Claim 4 of the present invention, there is provided an information distribution system for distributing information from an information distribution device to an information reception device on the basis of selection information indicating one or more pieces of sound information which are selected from plural pieces of sound information, in which the information distribution device creates editing information for editing and compositing plural sound data files including a sound data file which is real data of the selected sound information, to create a single sound contents, and distributes the editing information and access information for the plural sound data files to the information reception device, and the information reception device receives the editing information and the access information, and edits and composites the plural sound data files which are obtained on the basis of the received access information, on the basis of the received editing information, to create.one composite sound data file which is reproducible as a single sound contents.

Therefore, it is possible to realize an information distribution system which enables a user to enjoy contents constituted by desired information, with a simple reproducer, and has a small burden on a communication system.

According to Claim 5 of the present invention, in the information distribution system as defined in any of Claims 1 to 4, the information distribution device is provided with a sound data file storage means for storing the plural sound data files which are real data of the plural pieces of sound information.

Therefore, it is possible to realize an information distribution system which enables a user to enjoy contents constituted by desired information, with a simple reproducer.

According to Claim 6 of the present invention, in the information distribution system as defined in Claim 5, the sound data file storage means subjects the sound data file to a prescribed process and stores the processed sound data file.

Therefore, it is possible to realize an information distribution system which enables a user to enjoy contents constituted by desired information, with a simple reproducer.

According to Claim 7 of the present invention, in the information distribution system as defined in Claim 5, the information distribution device distributes a sound data file having a compression format varying according to a distributing destination.

Therefore, it is possible to realize an information distribution system which enables a user to enjoy contents constituted by desired information, with a simple reproducer.

According to Claim 8 of the present invention, in the information distribution system as defined in Claim 4, the information distribution device is provided with a sound data file information storage means for storing information relating to the plural sound data files which are real data of the plural pieces of sound information.

Therefore, it is possible to realize an information distribution system which enables a user to enjoy contents constituted by desired information, with a simple reproducer.

According to Claim 9 of the present invention, in the information distribution system as defined in Claim 2, when receiving an access to the composite sound data file, the information distribution device transmits an audio signal which is obtained by reproducing the composite sound data file, to the information reception device as an access source.

Therefore, even when the information reception device is not provided with a means for reproducing the sound data file, a user can listen to a sound program in which the sound information selected by himself/herself is edited into a single sound contents.

According to Claim 10 of the present invention, there is provided an information distribution system for distributing information from an information distribution device to an information reception device on the basis of selection information indicating one or more pieces of sound information which are selected from plural pieces of sound information, in which the information distribution device creates editing information for editing and compositing plural sound data files including a sound data file which is real data of the selected sound information, to create a single sound contents, and transmits the editing information and access information for the plural sound data files to a second information distribution device that obtains the plural sound data files by employing the access information as well as creates a composite sound data file which is obtained by editing and compositing the plural sound data files to create a single sound contents by employing the editing information, as well as distributes access information to the second information distribution device, to the information reception device.

Therefore, it is possible to realize an information distribution system which enables a user to enjoy contents constituted by desired information, with a simple reproducer, and has a small burden on a communication system. Further, only the sound data file information is stored in a server of a sound information service provider (first information distribution device), whereby a volume of the data stored in the server of the sound information service provider is reduced.

According to Claim 11 of the present invention, there is provided an information distribution device which distributes information to an information reception device on the basis of selection information indicating one or more pieces of sound information which are selected from plural pieces of sound information, comprising: a sound data file edition and composition process means for creating a composite sound data file which is obtained by editing and compositing plural sound data files including a sound data file which is real data of the selected sound information, to create a single sound contents; and an information distribution means for distributing the composite sound data file created by the sound data file edition and composition process means to the information reception device.

Therefore, by employing this information distribution device, an information distribution system which enables a user to enjoy contents constituted by desired information, with a simple reproducer, can be realized.

According to Claim 12 of the present invention, there is provided an information distribution device which distributes information to an information reception device on the basis of selection information indicating one or more pieces of sound information which are selected from plural pieces of sound information, comprising: a sound data file edition and composition process means for creating a composite sound data file which is obtained by editing and compositing plural sound data files including a sound data file which is real data of the selected sound information, to create a single sound contents; a composite sound data file storage means for storing the composite sound data file created by the sound data file edition and composition process means; and an information distribution means for distributing access information for the composite sound data file stored in the sound data file storage means to the information reception device.

Therefore, by employing this information distribution device, an information distribution system which enables a user to enjoy contents constituted by desired information, with a simple reproducer, and has a small burden on a communication system can be realized.

According to Claim 13 of the present invention, in the information distribution device as defined in Claim 11 or 12, the sound data file edition and composition process means performs edition and composition so that reproduction of the composite sound data file takes a prescribed time.

Therefore, sound contents having a reproduction time which is desired by a user are distributed.

According to Claim 14 of the present invention, in the information distribution device as defined in Claim 11 or 12, the sound data file edition and composition process means arranges the plural sound data files including the sound data file which is real data of the selected sound information in a prescribed priority order to be edited and composited.

Therefore, sound contents which are reproduced in the order of descending priorities are distributed.

According to Claim 15 of the present invention, in the information distribution device as defined in Claim 11 or 12, the sound data file edition and composition process means performs edition and composition so that the composite sound data file has a prescribed volume.

Therefore, sound contents with a data volume desired by a user are distributed.

According to Claim 16 of the present invention, there is provided an information distribution device which distributes information to an information reception device on the basis of selection information indicating one or more pieces of sound information which are selected from plural pieces of sound information, comprising: a sound data file editing means for creating editing information for editing and compositing plural sound data files including a sound data file which is real data of the selected sound information, to create a single sound contents; and an information distribution means for distributing the information created by the sound data file editing means and the plural sound data files to the information reception device dividedly in plural number of times.

Therefore, by employing this information distribution device, an information distribution system which enables a user to enjoy contents constituted by desired information, with a simple reproducer, and has a small burden on a communication system can be realized.

According to Claim 17 of the present invention, there is provided an information distribution device which distributes information to an information reception device on the basis of selection information indicating one or more pieces of sound information which are selected from plural pieces of sound information, comprising: a sound data file editing means for creating editing information for editing and compositing plural sound data files including a sound data file which is real data of the selected sound information, to create a single sound contents; and an information distribution means for distributing the information created by the sound data file editing means and access information for the plural sound data files to the information reception device.

Therefore, by employing this information distribution device, an information distribution system which enables a user to enjoy contents constituted by desired information, with a simple reproducer, and has a small burden on a communication system can be realized.

According to Claim 18 of the present invention, there is provided a sound reproducer which reproduces a sound data file to output a sound, comprising: a sound data file edition and composition process means for compositing plural sound data files on the basis of editing information for editing and compositing the plural sound data files to create a single sound contents, to create a composite sound data file which is obtained by editing and compositing the plural sound data files to create a single sound contents.

Therefore, by employing this information reception device, an information distribution system which enables a user to enjoy contents constituted by desired information, with a simple reproducer, and has a small burden on a communication system can be realized.

According to Claim 19 of the present invention, there is provided a sound information service provision method by which a sound information service provider supplies sound information to a user through a network, comprising: a step in which the sound information service provider receives, from the user, selection information indicating sound information whose supply is desired by the user; a step in which the sound information service provider supplies to the user the sound information corresponding to the selection information and advertisement information; and a step in which the sound information service provider charges a client who requests supply the advertisement information an advertisement fee according to the number of times that the advertisement information is supplied.

Therefore, a new information service which supplies sound information through the Internet can be realized.

According to Claim 20 of the present invention, there is provided a sound information service provision method by which a sound information service provider supplies sound information to a user with through a network, comprising: a step in which the sound information service provider receives, from the user, selection information indicating sound information whose supply is desired by the user; a step in which the sound information service provider supplies to the user the sound information corresponding to the selection information; and a step in which the sound information service provider provides a profit to a sound information provider which has provided the sound information to the sound information service provider, according to the number of times that the sound information is supplied.

Therefore, a new information service which supplies sound information through the Internet can be realized.

According to Claim 21 of the present invention, there is provided a sound information service provision method by which a sound information service provider supplies sound information to a user through a network, comprising: a step in which the sound information service provider receives, from the user, selection information indicating sound information whose supply is desired by the user; a step in which the sound information service provider supplies to the user the sound information corresponding to the selection information; and a step in which the sound information service provider charges the user for the supply of the sound information.

Therefore, a new information service which supplies sound information through the Internet can be realized.

According to Claim 22 of the present invention, there is provided a sound information service provision method by which a sound information service provider supplies sound information to a user from through a network, comprising: a step in which the sound information service provider receives, from the user, selection information indicating sound information whose supply is desired by the user; a step in which the sound information service provider supplies the sound information corresponding to the selection information to the user; and a step in which the sound information service provider provides a charged sound information provider with a service of collecting a fee for a charged sound information from the user as substitute, when the sound information supplied to the user is the charged sound information which is provided from the charged sound information provider.

Therefore, a new information service which supplies sound information through the Internet can be realized.

### BRIEF DESCRIPTION OF DRAWINGS

Figure 1 is a block diagram for explaining a flow of information and profits in a sound information service according to a first embodiment of the present invention.
Figure 2 is a block diagram for explaining a flow of information and profits in the sound information service according to the first embodiment of the invention.
Figure 3 is a block diagram for explaining a flow of information and profits in the sound information service according to the first embodiment of the invention.
Figure 4 is a block diagram for explaining a flow of information and profits in the sound information service according to the first embodiment of the invention.
Figure 5 is a block diagram for explaining a flow of information and profits in the sound information service according to the first embodiment of the invention.
Figure 6 is a block diagram for explaining a flow of information and profits in the sound information service according to the first embodiment of the invention.
Figure 7 is a block diagram for explaining a flow of information and profits in the sound information service according to the first embodiment of the invention.
Figure 8 is a block diagram for explaining a flow of information and profits in the sound information service according to the first embodiment of the invention.
Figure 9 is a block diagram for explaining a flow of information and profits in the sound information service according to the first embodiment of the invention.
Figure 10 is a block diagram for explaining a flow of information and profits in the sound information service according to the first embodiment of the invention.
Figure 11 is a block diagram for explaining a flow of information and profits in the sound information service according to the first embodiment of the invention.
Figure 12 is a block diagram for explaining a flow of information and profits in the sound information service according to the first embodiment of the invention.
Figure 13 is a block diagram for explaining a flow of information and profits in the sound information service according to the first embodiment of the invention.
Figure 14 is a block diagram for explaining a flow of information and profits in the sound information service according to the first embodiment of the invention.
Figure 15 is a block diagram for explaining a flow of information and profits in the sound information service according to the first embodiment of the invention.
Figure 16 is a block diagram for explaining a flow of information and profits in the sound information service according to the first embodiment of the invention.
Figure 17 is a block diagram for explaining a flow of information and profits in the sound information service according to the first embodiment of the invention.
Figure 18 is a block diagram illustrating a construction of an information distribution system according to a second embodiment of the present invention.
Figure 19 is a block diagram illustrating a construction of an information distribution system according to a third embodiment of the present invention.
Figure 20 is a block diagram illustrating a construction of an information distribution system according to a fourth embodiment of the present invention.
Figure 21 is a block diagram illustrating a construction of an information distribution system according to a fifth embodiment of the present invention.
Figure 22 is a block diagram illustrating a construction of an information distribution system according to a sixth embodiment of the present invention.
Figure 23 is a block diagram illustrating a construction of an information distribution system according to a seventh embodiment of the present invention.
Figure 24 is a diagram showing an example of a construction of a sound data storage means of the information distribution systems according to the embodiments of the present invention.

### BEST MODE TO EXECUTE THE INVENTION

### [Embodiment 1]

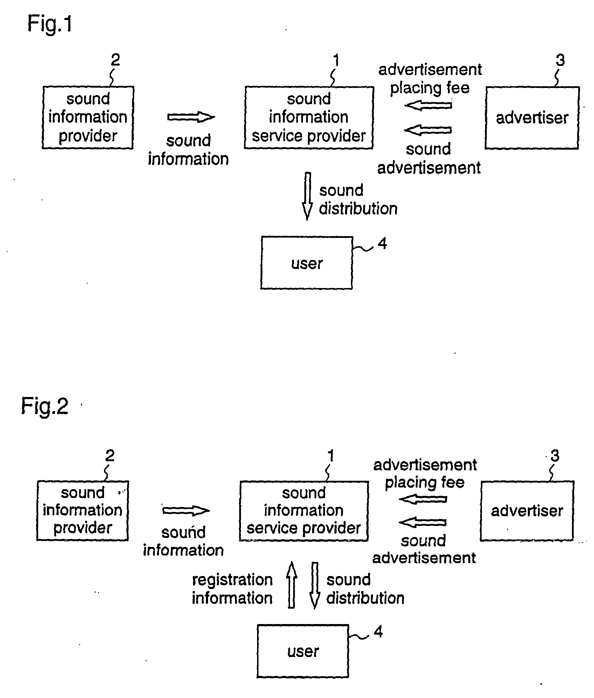

Figure 1 is a diagram for explaining a sound information service according to a first embodiment of the present invention.

In the drawing, numeral 1 denotes a sound information service provider, numeral 2 denotes a sound information provider, numeral 3 denotes an advertiser, and numeral 4 denotes a user.

According to the sound information service of this first embodiment, the sound information service provider 1 receives sound information from the information provider 2 as well as sound advertisement information from the advertiser 3, and distributes a combination of the sound information and the sound advertisement to the user 4 through the Internet or the like. Since this sound information service provides advertisements to the user by sound, contents of the advertisement are more easily accepted by the user as compared with an advertisement of only characters or images, and thus the advertiser can expect a higher advertising effectiveness. Further, the sound information service provider 1 can make profits by charging the advertiser 3 fees for placing the advertisement, according to the number of times that the sound advertisement is distributed. To count the number of times that the sound advertisement is distributed, a server for distributing information to the user can be provided with a counter for counting the number of times that the sound advertisement as a counting target is distributed.

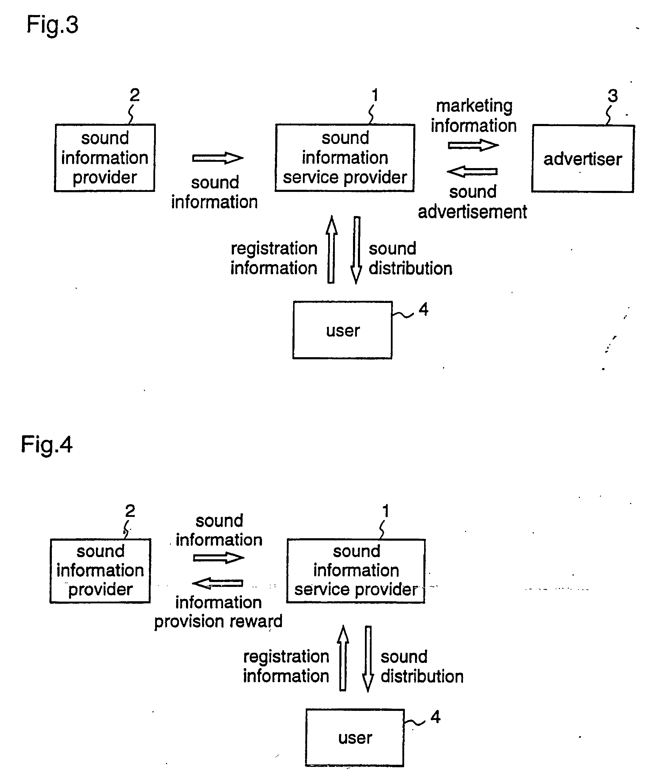

A description will be given of a specific operation of the sound distribution from the sound information service provider 1 to the user 4. The sound information service provider 1 creates a list of available sound information (radio magazine list) for each user on the basis of a sound data file which is real data of sound information provided from the sound information provider 2, and provides the radio magazine list to the user 4 by distributing it to each user by e-mail or through download by the user from a Web site of the sound information service provider. The user 4 who has obtained the radio magazine list selects sound information which he/she wants to listen to, from the list and transmits a distribution condition including the selection information as well as a distributing destination (distributing address) .to which the selected sound information is to be distributed, to the sound information service provider 1, as registration information, as shown in figure 2, thereby performing registration. The sound information service provider 1 edits the sound data file provided from the sound information provider 2 in combination with the sound advertisement provided from the advertiser 3, on the basis of the registration information from the user 4, and performs sound distribution to each user 4. At the edition, the sound information service provider 1 analyzes the sound information which is desired to be distributed, which has been registered by the user, and composites the sound information with a sound advertisement suiting his/her taste. In this way, by utilizing user's selection information about the sound information, a sound advertisement that suites his/her taste can be distributed without conducting a questionnaire survey or the like, whereby advertising effectiveness is increased and information that is useful for the user can be provided. Further, according to the sound information service of this embodiment, the sound information service provider 1 can take statistics about various kinds of data such as sound information distributed to frequent net shoppers or analysis data on taste of sound information by age, sex, or the like, which are obtained by providing the sound information service to the user 4, and provide an obtained result for pay to the advertiser 3 as marketing information as shown in figure 3, thereby making profits.

Figure 4 is a diagram showing an example of profit provision from the sound information service provider to the information provider in the sound information service according to the first embodiment. In the drawing, the same reference numerals as those shown in figure 1 denote the same or corresponding parts.

According to the sound information service of this embodiment, it is desirable that high-quality sound information is continuously provided from the sound information provider 2 to the sound information service provider 1. Then, the sound information service provider 1 gives some profits to the sound information provider 2, thereby urging the provider 1 to provide high-quality sound information. In the example shown in figure 4, the sound information service provider provides monetary rewards to the information provider who has provided high-quality information, as profits provided from the sound information service provider to the information provider. For example, the sound information service provider 1 gives a reward to the sound information provider 2 for information provision according to a audience rating (the number of times of distribution to users), for free sound information acquiring higher audience rating, as follows. 500,000 yen is paid per month for sound information which has the highest monthly audience rating, 300,000 yen is paid per month for sound information which has the second highest audience rating, 100,000 yen is paid per month for sound information which have the third to fifth highest audience ratings, 30,000 yen is paid per month for sound information which have the sixth to tenth highest audience ratings, and no reward is paid for sound information which have the eleventh highest and lower audience ratings. Accordingly, continuous provision of high-quality sound information can be urged.

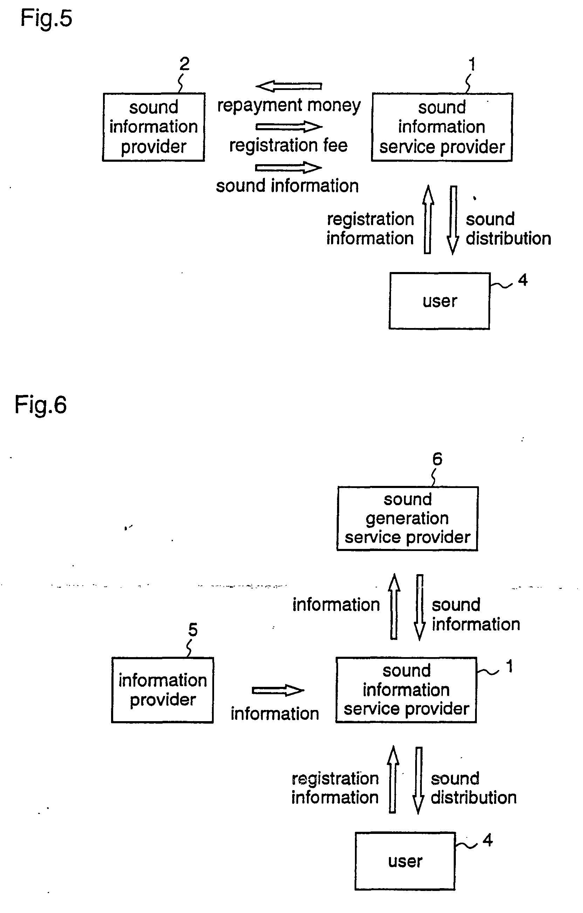

Figure 5 is a diagram showing another example of profit provision from the sound information service provider to the information provider according to the sound information service of the first embodiment. In the drawing, the same reference numerals as those shown in figure 1 denote the same or corresponding parts. In the example shown in figure 5, the sound information service provider 1 collects fees for registering sound information, for example, 100 yen for registering one piece of sound information (sound data file) or 1000 yen only at the initial registration, from the sound information provider 2, and distributes prescribed repayment money to the information provider according to the audience rating (the number of times of distribution to users) of the provided sound information, as profit provision from the sound information service provider to the information provider. By developing the system of profit provision to the information provider as described above, the sound information service provider can collect proscribed fees not only from the user or the advertiser but also from the information provider, as well as can urge continuous provision of high-quality sound information.

Figure 6 is a diagram showing another example of profit provision from the sound information service provider to the information provider according to the sound information service of the first embodiment. In the drawing, the same reference numerals as those shown in figure 1 denote the same or corresponding parts. Numeral 5 denotes an information provider which provides information in the form of data other than sound data, such as text data, and numeral 6 denotes a sound generation service provider which turns the data other than sound data into sounds to make sound information. In the example shown in figure 6, the sound information service provider provides the information provider which provides high-quality information with a service of turning the information into sounds for free, as a profit provision from the sound information service provider to the information provider that provides information in the form of data other than sound data, such as text data. By developing the system of profit provision to the information provider as described above, burdens on the information provider which are required to turn the information into sounds can be reduced, and continuous provision of high-quality information is urged.

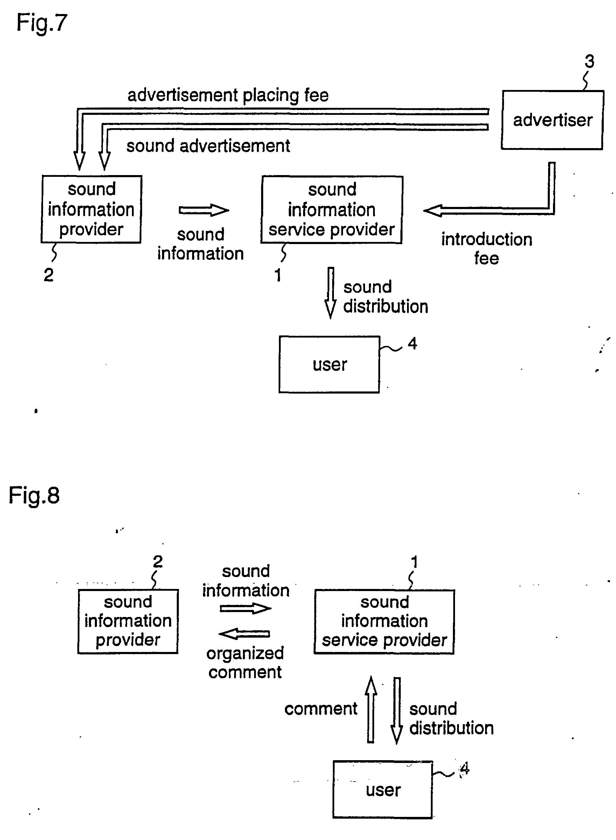

Figure 7 is still another example of profit provision from the sound information service provider to the information provider according to the sound information service of the first embodiment. In the drawing, the same reference numerals as those shown in figure 1 denote the same or corresponding parts. In the example shown in figure 7, the sound information service provider 1 introduces to the advertiser 3 the sound information provider 2 that provides sound information with a high audience rating. The advertiser 3 directly requests the sound information provider 2 introduced by the sound information service provider 1 to incorporate a sound advertisement into the sound information, and pays the sound information provider 2 a fee for placing the advertisement as well as the sound information service provider 1 an introduction fee. The sound information provider 2 who receives the request from the advertiser 3 provides the sound information service provider 1 with sound information including the sound advertisement. By developing the system of profit provision to the information provider as described above, the advertiser 3 can achieve a higher advertising effectiveness, and the sound information provider can make profits from the provided sound information.

Figure 8 is still another example of profit provision from the sound information service provider to the information provider according to the sound information service of the first embodiment. In the drawing, the same reference numerals as those shown in figure 1 denote the same or corresponding parts. In the example shown in figure 8, the sound information service provider 1 organizes comments or reactions of the user 4 on/to the sound information provided from the sound information provider 2, and takes statistics therefrom (for example, the sound information was favorably accepted by the 20's but unfavorably accepted by the 40's), and gives the information provider feedback. By developing the system of profit provision from the sound information service provider 1 to the sound information provider 2 as described above, the sound information service provider 1 provides organized data to the sound information provider 2 so as to respond desires for "knowing reactions to the provided sound information", thereby urging continuous provision of the sound information.

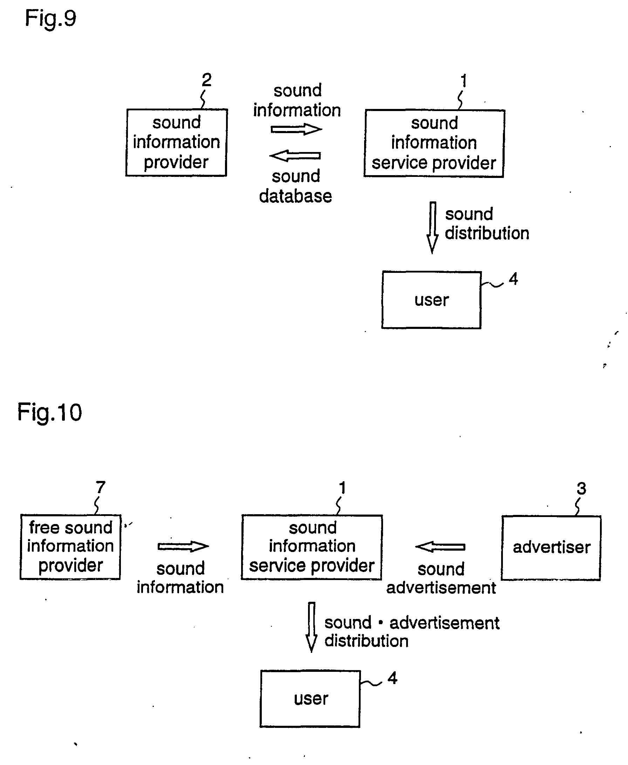

Figure 9 is a diagram showing still another example of profit provision from the sound information service provider to the information provider according to the sound information service of the first embodiment. In the drawing, the same reference numerals as those shown in figure 1 denote the same or corresponding parts. In the example shown in figure 9, the sound information service provider 1 turns the sound information provided from the sound information provider 2 into a database (for example, into a CD), and distributes the database to the sound information provider 2. By developing the system of profit provision from the sound information service provider 1 to the sound information provider 2 as described above, the sound information service provider 1 responds desires of the information provider 2 for "adequately organizing and collecting the sound information provided by himself/herself", thereby urging continuous provision of the sound information.

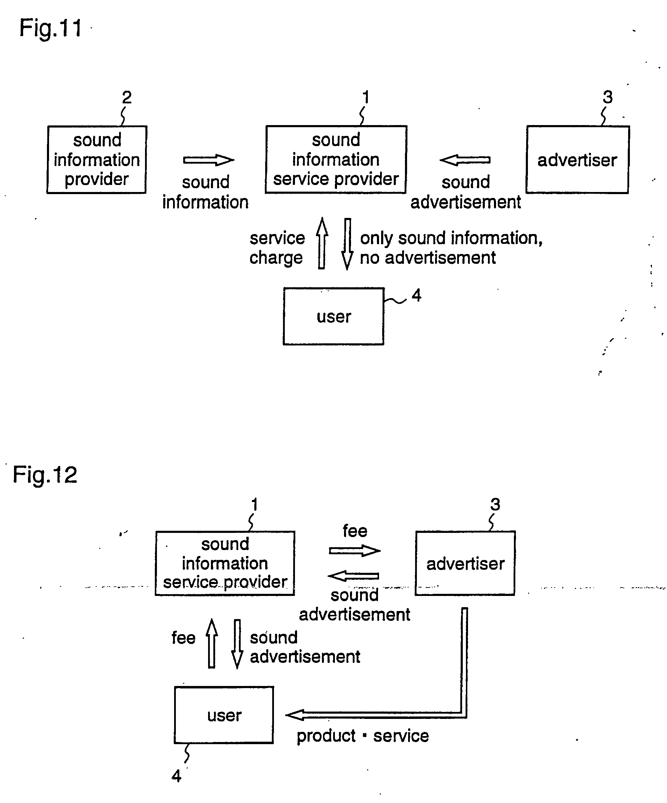

Figure 10 is a diagram showing an example of a system relating to user's burden on sound distribution according to the sound information service of the first embodiment. In the drawing, the same reference numerals as those shown in figure 1 denote the same or corresponding parts. Numeral 7 denotes a free sound information provider which provides free sound information to the sound information service provider 1. In the example shown in figure 10, the sound information service provider 1 provides the user 4 with the sound information service for free on the assumption that the user 4 listens to a sound advertisement. According to this service, the sound information service provider 1 edits the sound data file provided from the free sound information provider 7 in combination with the sound advertisement provided from the advertiser 3, and performs sound distribution to the user 4. In this way, by eliminating user's burden (free), the number of users of the sound information service is increased. With the increase in the number of users, the number of advertisers is accordingly increased, whereby the sound information service provider 2 can expect an increased profit. Further, it is possible that the user 4 is enabled to decide whether to listen to the sound advertisement or not, and when the user decides not to listen to the sound advertisement, the sound information service provider 1 distributes only sound information including no sound advertisement to the user 4, and collects a service charge from the user 4,. as shown in figure 11. By developing the system relating to user's burden which is required for sound distribution as described above, the user can decide at his request to receive a service for free, to receive only required information or the like, whereby the convenience is enhanced and further the sound information service provider can secure stable profits.

Figure 12 is a diagram showing an example in which the sound information service provider 1 collects fees as substitute for the advertiser 3 in the sound information service according to the first embodiment. In the drawing, the same reference numerals as those shown in figure 1 denote the same or corresponding parts. In the example shown in figure 12, when the user 4 listens to the sound advertisement distributed from the sound information service provider 1 and purchases a product or a service from the advertiser 3, the purchase price is collected from the user by the sound information service provider 1 as substitute for the advertiser 3. In this way, when the sound information service provider 1 provides a service of intervening between the user 4 and the advertiser 3 to facilitate purchase and selling, both the user 4 and the advertiser 3 feel relieved to buy and sell.

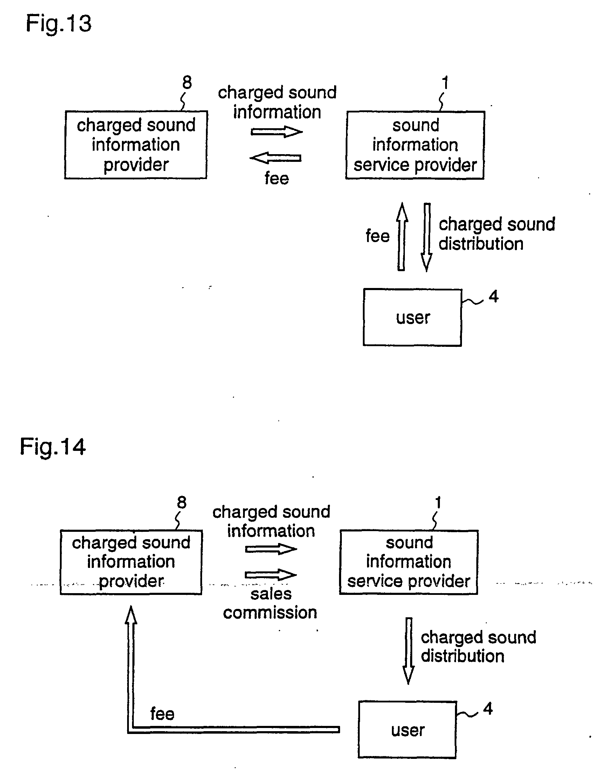

Figure 13 is a diagram showing another example in which the sound information service provider 1 collects fees as substitute for the advertiser 3 in the sound information service according to the first embodiment. In the drawing, the same reference numerals as those shown in figure 1 denote the same or corresponding parts. Numeral 8 denotes a charged sound information provider which provides charged sound information. In the example shown in figure 13, when the user 4 receives charged sound information provided from the charged sound information provider 8, distributed from the sound information service provider 1, a fee for the charged sound information is collected from the user by the sound information service provider 1 as substitute for the charged sound information provider 8. In this way, when the sound information service provider 1 provides a service of intervening between the user 4 and the charged sound information provider 8 to facilitate purchase and selling of information, the charged sound information provider 8 and the user 4 can easily and surely buy and sell the information. In this case, the sound information service provider 1 obtains part of the collected fee as commission charges, thereby making a profit from the service of selling the charged sound information, which includes fee collection as substitute for the charged sound information provider 8. Further, as shown in figure 14, it is also possible that the charged sound information provider 8 collects the fee for the charged sound information directly from the user 4, and the sound information service provider 1 collects sales commission from the charged sound information provider 8 according to sales of the charged sound information via the sound information service provider 1. By employing the charging system as described above, the sound information service provider 1 can find out whether the sound information provided from the sound information provider is for a commercial purpose or an noncommercial purpose, thereby developing an economical service.

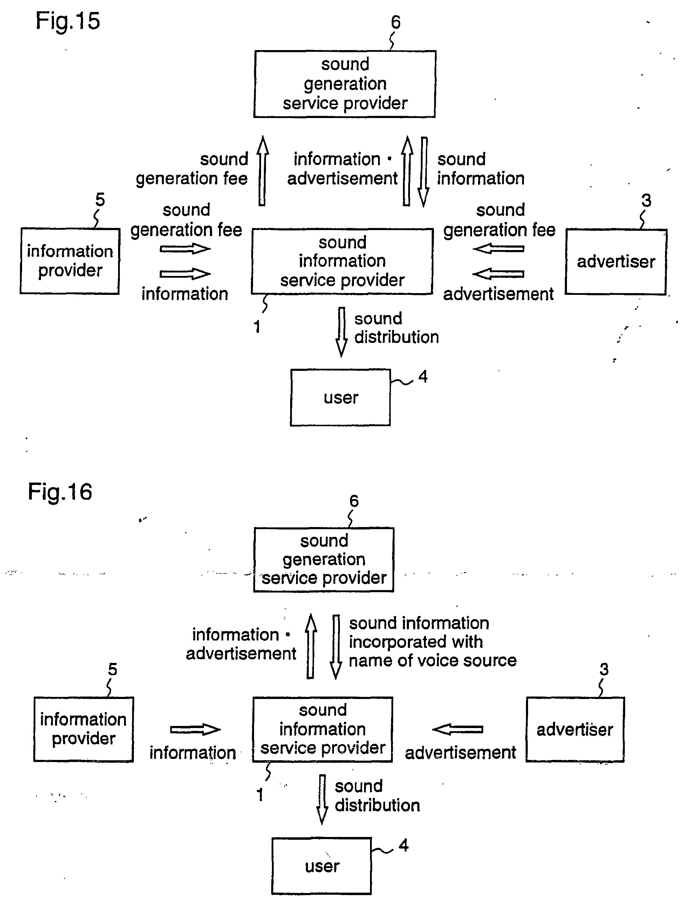

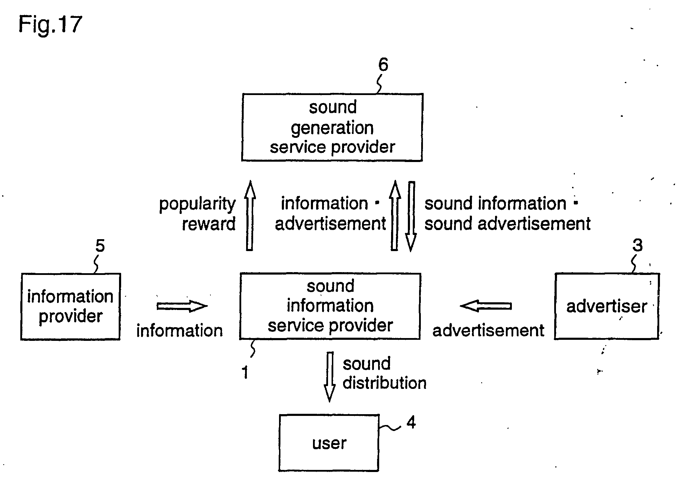

Figure 15 is a diagram showing an example of a charging system in a case where the information and the advertisement provided to the sound information service provider 1 from the information provider and the advertiser are data other than sound data, and the sound information service provider 1 asks the sound generation service provider to turn the information and the advertisement provided to the sound information service provider 1 into sounds, according to the sound information service of the first embodiment. In the example shown in figure 15, the sound information service provider 1 collects costs for turning the provided information and advertisement constituted by data other than sound data into sounds, from the information provider 5 and the advertiser 3, as a sound generation fee, asks the sound generation service provider 6 to turn the provided information and advertisement into sounds, and pays the sound generation service provider 6 the fee for the sound generation service. When the information provider 5 and the advertiser 3 directly ask the sound generation service provider 6 to turn the information and the advertisement into sounds, the information provider 5 and the advertiser 3 are required to invest the time and effort to look for a high-quality sound generation service provider, or costs for sound generation become comparatively high when an amount of data to be turned into sounds is small, resulting in a large burden on the information provider 5 and the advertiser 3, and further it is thought that there is a wide range of variations in a sound quality of sound information and a sound advertisement provided to the sound information service provider. However, as shown in figure 15, when the sound information service provider 1 intervenes between the information provider 5 or the advertiser 3 and the sound generation service provider 6 for the convenience, the burden on the information provider 5 and the advertiser 3 which is required to turn the information and the advertisement into sounds can be reduced, and the sound quality of the sound information and the sound advertisement provided to the sound information service provider can be easily made uniform. In the example in figure 15, the sound information service provider 1 pays the sound generation service provider the fee for the sound generation. However, as shown in figure 16, the sound information service provider 1 may permit the sound generation service provider to display the subject thereof by incorporating the name of a person issuing the voice (voice source) in the sound information or the like, instead of giving monetary rewards. In this case, it is thought that people who aspire to be an announcer or a dubbing actor/actress take charge of the sound generation service for free in order to sell their names, whereby the information and the advertisement can be turned into sounds for free, and a great effect is also expected in terms of discovery of talent. Further, in addition to giving permission to the sound generation service provider to indicate the subject thereof in the sound information, the sound information service provider may give rewards to a voice source which gains popularity among users according to a degree of his popularity, as shown in figure 17. Then, it is likely that a larger number of people take charge of the sound generation for free since there is a chance that they can make profits depending on their popularities, and in addition, a quality of sound the generation is expected to be increased owing to their efforts to gain popularity.

### [Embodiment 2]

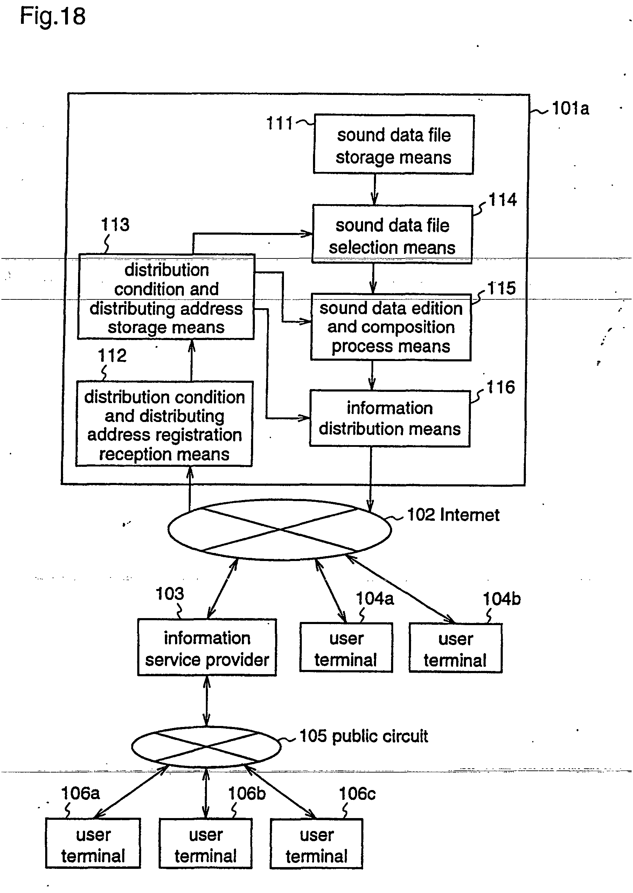

Figure 18 is a diagram illustrating a construction of an information distribution system according to a second embodiment of the present invention.

In figure 18, numeral 101a denotes a server (information distribution device) of a sound information service provider which constitutes the information distribution system according to the second embodiment. Numeral 102 denotes the Internet, and numeral 105 denotes a public circuit. Numeral 103 denotes an information service provider which connects a user terminal connected to the public circuit 105 to the Internet 102, numerals 104a and 104b denote user terminals (information receivers) which are directly connected to the Internet 102 not via the provider, and numerals 106a, 106b, and 106c denote user terminals (information receivers) which are connected to the information service provider 103 via the public circuit 105 and are connected to the Internet 102 via the provider. Numeral 111 denotes a sound data file storage means for storing a plurality of sound data files which are created and provided by a sound data creator (sound information provider, advertiser, sound generation service provider), numeral 112 denotes a distribution condition and transmitting address registration reception means for receiving registration of a distribution condition and a transmitting address from a user, numeral 113 denotes a distribution condition and transmitting address storage means for storing the distribution condition and the transmitting address received by the distribution condition and transmitting address registration reception means 112, and numeral 114 denotes a sound data file selection means for selecting the plural sound data files including a sound data file which is real data of sound information selected by the user, on the basis of selection information included in the distribution condition stored in the distribution condition and transmitting address storage means 113. Numeral 115 denotes a sound data edition and composition process means which receives the plural sound data files selected by the sound data file selection means 114, and edits and composites these plural sound data files to create a single composite sound data file, and numeral 116 denotes an information distribution means for distributing the composite sound data file created by the sound data edition and composition process means 115 to the distributing destination indicated by the transmitting address which is stored in the distribution condition and transmitting address storage means 113.

Next, an operation of the information distribution system according to the second embodiment will be described.

According to the information distribution system of the second embodiment, initially, sound data files which are real data of sound information that are created by the sound data creator (sound information provider, advertiser, sound generation service provider) are provided to the sound information service provider by means of an HTTP (Hyper Text Transfer Protocol), an FTP (File Transfer Protocol), an e-mail or the like, and are stored in the sound data file storage means 111 of the server 101. Specific contents of the sound information provided by the sound data creator may be news, music such as the latest hit tune, an English conversation course, a radio novel, a sound column on a hobby or a product, music employed as BGM for another piece of sound information, an advertisement by sound or the like. The sound information service provider creates a list of available sound information (radio magazine list) for each user on the basis of the sound data files stored in the sound data file storage means 111 of its server 101, and provides the radio magazine list to the user by distributing the same to each user by e-mail, by the user downloading the same from a Web site of the sound information service provider or the like. Generally, the sound information service provider lists sound information other than the advertisement by sound among the above-described sound information, and provides the listed sound information to the user. Since the sound information can be charged information or free information, when distinction therebetween is indicated in the list, the user can easily recognize whether information to listen to is charged or free. Further, it is possible to enable the user to decide on the list whether the advertisement by sound is included in the provided information or not.

The user who has obtained the radio magazine list selects sound information to listen to from the list, and registers a distribution condition including information on the selection as well as a distributing destination (distributing address) to which the selected sound information is distributed, with the server 101 of the sound information service provider from the user terminal 104 or the user terminal 106 via the Internet 102. Here, the distribution condition can include additive information indicating a desired reproduction time for the whole sound information to be distributed, an order for reproducing plural pieces of selected sound information, the presence or absence of BGM or advertisement by sound or the like, in addition to the above-described selection information. The server 101 of the sound information service provider receives the registration of the distribution condition and the transmitting address from the user, with the distribution condition and transmitting address registration reception means 112, and stores the received distribution condition and transmitting address in the distribution condition and transmitting address storage means 113. Next, in the server 101, the sound data file selection means 114 obtains the distribution condition from the distribution condition and transmitting address storage means 113, selects plural sound data files including a sound data file of the sound information selected by the user, from the sound data file storage means 111 on the basis of the selection information included in the distribution condition, and transmits the selected sound data files to the sound data edition and composition process means 115. The plural sound data files selected by the sound data file selection means 114 include, according to need, a data file of music to be mixed as BGM for another piece of sound information, a sound data file of an advertisement by sound, a sound data file of sound information recommended by the sound information service provider or the like, in addition to the sound data file which is real data of the sound information selected by the user. The sound data edition and composition process means 115 edits and composites the plural sound data files received from the sound data file selection means 114, creates a single composite sound data file that includes the plural pieces of sound information selected by the user, and transmits the created composite sound data file to the information distribution means 116.

A description will be given of a method for editing the sound data files by the sound data edition and composition process means 115. With respect to an order of reproducing the plural sound data files, the editing is performed on the basis of a rule that reproduction is performed in the order specified by the user in the additive information, in an order in which sound information that is selected at the higher number of times is reproduced first, in an order in which charged sound information is reproduced first and, thereafter, free sound information is reproduced, or the like. Further, with respect to mixing, the editing is performed on the basis of mixing specification information provided by the sound data creator, mixing specification information specified by the user in the additive information, mixing specification information previously decided according to the kind of the sound information or the like. Furthermore, with respect to a reproduction condition, the editing is performed on the basis of information specified by the user in the additive information, which relates to volume setting, a fade-in/fade-out process, reproduction speed setting, tempo setting, tone setting or the like, or a previously decided rule. For example, when a usual reproduction time for the sound information selected by the user in total is slightly longer than the desired reproduction time for the whole sound information to be distributed, which is specified by the user in the additive information, a reproduction speed is set to be increased so as not to have an adverse effect on the listening to the sound information, whereby the reproduction time for the whole sound information to be distributed is equal to the reproduction time desired by the user. With respect to insertion of the advertisement by sound, the advertisement by sound is inserted according to a rule which is previously decided on the basis of the number or kind of the sound information selected by the user, the provider of the sound data or the like. When the usual reproduction time for the sound information selected by the user in total is shorter than the desired reproduction time for the whole sound information to be distributed, which is specified by the user in the additive information, recommended sound information may be automatically inserted to have the reproduction time desired by the user. Further, the editing may be performed so that a volume of data of the whole sound information to be distributed is equal to a desired volume of the whole sound information to be distributed, which is specified by the user in the additive information.

The information distribution means 116 distributes the composite sound data file received from the sound data edition and composition process means 115 to the user terminal to which this composite sound data file is to be distributed, by e-mail, according to the information of the transmitting address stored in the distribution condition and transmitting address storage means 113. Here, it is thought that a volume of data to be distributed by e-mail is considerably restricted. However, recently, due to advancements in audio signal compression technique, it is becoming possible to turn contents for approximately 5 minutes into about 1 megabyte of data in the case of a sound quality at a level almost equal to that of AM radio broadcasting. For example, when a reproduction time for the whole composited contents is approximately 1 hour, a volume of the data of the composite sound data file is about 12 megabytes, and this composite sound data file can be distributed by e-mail according to this embodiment.

The user reproduces the composite sound data file attached in e-mail which is received by the user terminal, with a sound reproducer for reproducing the sound data file, thereby listening to a sound program in which the sound information of his choice is edited into a single sound contents. As a specific sound reproducer, there is a personal computer equipped with a general-purpose or exclusive sound reproduction application, a semiconductor player or the like.

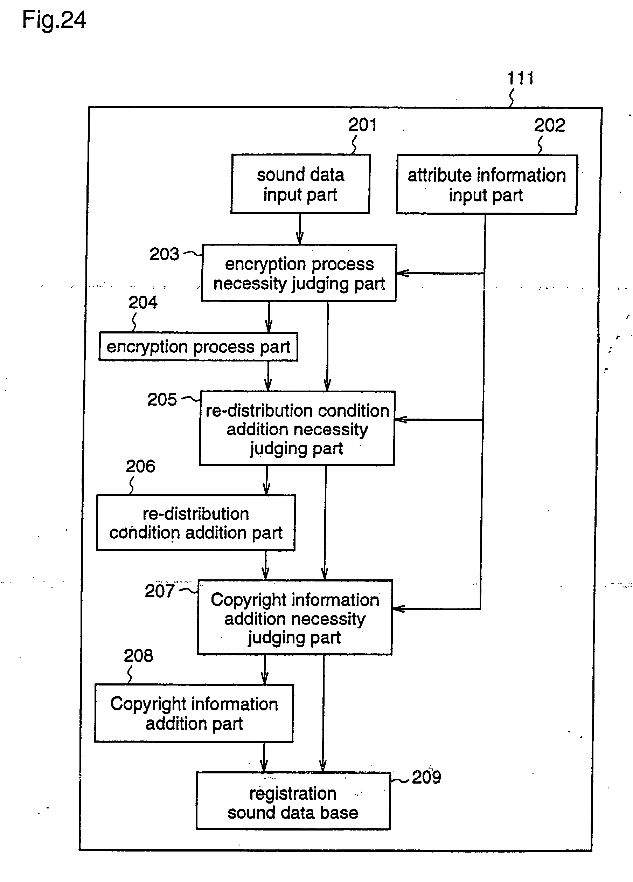

There is a case where, when the sound data creator provides the sound data to the sound information service provider, the sound data creator desires to encrypt the sound data, to set a re-distribution condition, or to add Copyright information to the sound data. In this case, the sound data creator himself can process, such as encrypting, the sound data which is to be provided to the sound information service provider. However, this complicates the creation of the sound data, and when plural sound data creators respectively perform encryption according to different encryption methods, the sound data edition and composition process at the server of the sound information service provider or the sound reproduction by the user becomes complicated. Figure 24 is a diagram illustrating the construction of the sound data storage means 111 of the server of the sound information service provider, which is able to avoid the above-described problems when the sound data creator desires to encrypt the sound data which is to be provided to the sound information service provider, to set the re-distribution condition, or to add the Copyright information to the sound data, according to the information distribution system of the second embodiment. In the drawing, numeral 201 denotes a sound data input part for receiving the sound data created by the sound data creator, and numeral 202 denotes an attribute information input part for receiving attribute information indicating a condition specified by the sound data creator, that relates to the sound data, such as encryption is performed/encryption is not performed, re-distribution condition is set/re-distribution condition is not set, Copyright information is added/Copyright information is not added. Numeral 203 denotes an encryption process necessity judging part for judging whether the encryption process is required to be performed on the sound data inputted to the sound data input part 201 or not, on the basis of the attribute information inputted to the attribute information input part 202. Numeral 204 denotes an encryption process part for performing the encryption process on the inputted sound data when it is judged that the encryption process is necessary, by the encryption process necessity judging part 203. Numeral 205 denotes a re-distribution condition addition necessity judging part for judging whether the re-distribution condition is required to be added to the sound data inputted to the sound data input part 201 or not, on the basis of the attribute information inputted to the attribute information input part 202. Numeral 206 denotes a re-distribution condition addition part for adding the re-distribution condition to the inputted sound data when it is judged that the addition of the re-distribution condition is necessary, by the re-distribution condition addition necessity judging part 205. Numeral 207 denotes a Copyright information addition necessity judging part for judging whether the Copyright information is required to be added to the sound data inputted to the sound data input part 201 or not, on the basis of the attribute information inputted to the attribute information input part 202. Numeral 208 denotes a Copyright information addition part for adding the Copyright information to the inputted sound data when it is judged that the addition of the Copyright information is necessary, by the Copyright information addition necessity judging part 207. Numeral 209 denotes a registration sound database for storing the sound data file which has been processed on the basis of the attribute information. Since the server of the sound information service provider is provided with the sound data storing means 111 as shown in figure 24, when the sound data creator provides the sound data file to the server of the sound information service provider, the sound data creator has only to add the attribute information to each sound data file, which indicates the specification condition such as encryption is performed/encryption is not performed, re-distribution condition is set/re-distribution condition is not set, Copyright information is added/Copyright information is not added, whereby the sound data file which has been processed as desired by the sound data creator is automatically stored in the sound data storage means 111 of the server of the sound information service provider, resulting in a reduction in a process for creating the sound data by the sound data creator, and simplification in the sound data edition and composition process in the server of the sound information service provider as well as in the sound reproduction by the user.

Further, it is also possible that the sound data file storage means 111 stores plural sound data files which are obtained by converting a single piece of sound data into data with different compression data formats, whereby these plural sound data files are properly used according to need. Furthermore, it is also possible that the sound data file storage means 111 stores only one sound data file and distributes the same with a different compression format according to performance of a receiver which is included in the attribute information, or the specification by the user.

As described above, according to the information distribution system of the second embodiment, the server 101 of the sound information service provider creates the composite sound data file which is obtained by editing and compositing the plural sound data files including the sound data file which is real data of the sound information selected by the user, to create a single sound contents, and distributes the composite sound data file to the user terminal, thereby realizing an information distribution system which enables the user to enjoy the contents constituted by desired information, with a simple reproducer.

In the description for this embodiment, the user selects specific sound information from the plural pieces of sound information as follows. That is, the user is provided with the list of available sound information (radio magazine list) from the sound information service provider by e-mail distribution to each user, or user' download of the list from a Web site of the sound information service provider, and the user who has obtained the radio magazine list selects sound information to listen to from the list, and registers the distribution condition including information on the selection as well as the distributing destination (distributing address) with the server 101 of the sound information service provider via the Internet 102. However, a method for selecting the sound information by the user is not restricted thereto, and, for example, the selection and the registration can be executed by a CGI (Common Gateway Interface) on the Web site of the sound information service provider.

Further, in the description for this embodiment, the user specifies the sound information itself from the plural pieces of sound information. However, it is also possible to make the user specify a category of the sound information instead of specifying the sound information itself, so that when a new sound data file is registered with the sound data file storage means 111, this new sound data file is distributed to the user who has specified the category to which this new sound data file belongs to.

Furthermore, in the description for this embodiment, the information distribution means 116 distributes the composite sound data file received from the sound data edition and composition process means 115 to the user terminal to which this composite sound data file is to be distributed, by e-mail, according to the information of the transmitting address which is stored in the distribution condition and transmitting address storage means 113, and the user terminal reproduces the composite sound data file attached to the received e-mail, with a sound reproducer for reproducing the sound data file. However, the transmitting address and the distribution method are not restricted to e-mail, and distribution may be performed by means of Internet streaming broadcast, packet data communication to a portable phone, terrestrial or satellite data broadcast or the like.

Further, when the composite sound data file includes map information of the original plural sound data files, and the sound reproducer such as a semiconductor player which is used by the user is provided with a registration button/registration release button, and a means for uploading registration information indicating selection of the sound information or registration information indicating selection release, to the sound information service provider, with sound data (sound information) which is being reproduced at the moment when the user pushes the button during reproduction of the composite sound data file corresponding to the registration or the registration. release, an information distribution system which enables the user to perform selection/selection release of the sound information with considerably simple operation can be realized.

When the user terminal has a GPS (Global Positioning System) function, instead of selecting the sound information through user input, the user terminal may automatically select sound information relating to a neighboring facility or sound information relating to a traffic situation according to a place of the user or a time, whereby the selected sound information is uploaded to the sound information service provider.

### [Embodiment 3]

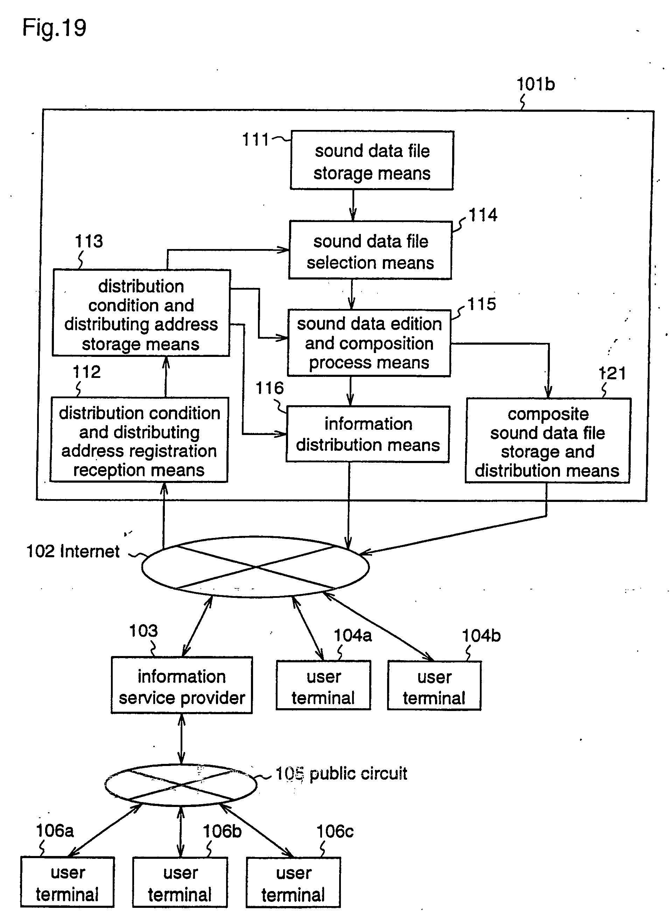

Figure 19 is a diagram illustrating the construction of an information distribution system according to a third embodiment of the present invention. In figure 19, the same reference numerals as those shown in figure 18 denote the same or corresponding parts. Numeral 101b denotes a server of the sound information service provider which constitutes the information distribution system according to the third embodiment, and numeral 121 denotes a composite sound data file storage and distribution means for storing the composite sound data file created by the sound data edition and composition process means 115 and distributing the stored sound data file by an HTTP or an FTP according to an access from the user terminal.

Next, an operation of the information distribution system according to the third embodiment will be described.

According to the information distribution system of the third embodiment, operations of storing the sound data file created by a sound data creator into the sound data file storage means 111, providing a radio magazine list to each user, selecting sound information by a user as well as registering a distribution condition and a distributing address with the server 101, selecting the sound data file by the sound data file selection means 114, and editing and compositing plural sound data files by the sound data edition and composition process means 115 are the same as the operations of the information distribution system according to the second embodiment.

Hereinafter, a description will be given of the operation of the information distribution system according to the third embodiment with respect to a difference from the operation of the information distribution system according to the second embodiment.

According to the information distribution system of the third embodiment, the sound data edition and composition process means 115 edits and composites plural sound data files to create a single sound data file including plural pieces of sound information selected by a user, and transmits the created sound data file to the composite sound data file storage and distribution means 121 to be stored therein, as well as transmits access information (link information) to access the composite sound data file stored in the composite sound data file storage and distribution means 121, to the information distribution means 116. The information distribution means 116 distributes the access information (link information) received from the sound data edition and composition process means 115 to the user terminal by e-mail according to information of the transmitting address stored in the distribution condition and transmitting address storage means 113. In the third embodiment, since the information distributed by e-mail is only the access information (link information) to access the composite sound data file stored in the composite sound data file storage and distribution means 123 of the server 101, a burden on a mail server or the like can be considerably reduced as compared with the case where the composite sound data file is distributed by e-mail as described for the first embodiment.

The user accesses the composite sound data file storage and distribution means 123 of the server 101 by employing a communication software of a personal computer according to the access information (link information) which is included in the e-mail received by the user terminal, and downloads the composite sound data file stored in the composite sound data file storage and distribution means 123 via the Internet 102. The user reproduces the so-obtained composite sound data file with a sound reproducer for reproducing the sound data file, thereby listening to a sound program in which sound information of his choice is edited into a single contents.

As described above, according to the information distribution system of the third embodiment, the server 101 of the sound information service provider creates the composite sound data file which is obtained by editing and compositing the plural sound data files including a sound data file which is real data of the sound information selected by the user, to create a single sound contents, and distributes the access information to access the composite sound data file to the user terminal, thereby realizing an information distribution system which enables the user to enjoy contents which is constituted by desired information with a simple reproducer, and has a small burden on a communication system.

According to the information distribution system of the third embodiment, the information distribution means 116 distributes the access information (link information) received from the sound data edition and composition process means 115 to the user terminal by e-mail according to the information of the transmitting address stored in the distribution condition and transmitting address storage means 113, and the user accesses the composite sound data file storage and distribution means 123 of the server 101 by employing a communication software of a personal computer according to the access information (link information) included in the e-mail received by the user terminal. However, it is also possible that the access information (link information) is stored in the server 101, and the user terminal downloads the access information stored on the server by an HTTP or the like, and accesses the composite sound data file storage and distribution means 123 of the server 101 according to the downloaded access information (link information).

Further, according to the information distribution system of the third embodiment, the composite sound data file storage and distribution means 123 distributes the composite sound data file by an HTTP or an FTP according to an access from the user terminal. However, the composite sound data file storage and distribution means 123 may transmit an audio signal which is obtained by reproducing the composite sound data file, to the user terminal according to the access from the user terminal. To be specific, for example, it is possible to realize a system in which, when the user terminal is a portable phone, the information distribution means 116 of the server 101b distributes a phone number as access information to access the composite sound data file, and when the user calls at this phone number with the portable phone, the audio signal obtained by reproducing the composite sound data file is transmitted to the portable phone, thereby enabling the user to listen to a sound program in which sound information of his choice is edited into a single sound contents.

### [Embodiment 4]

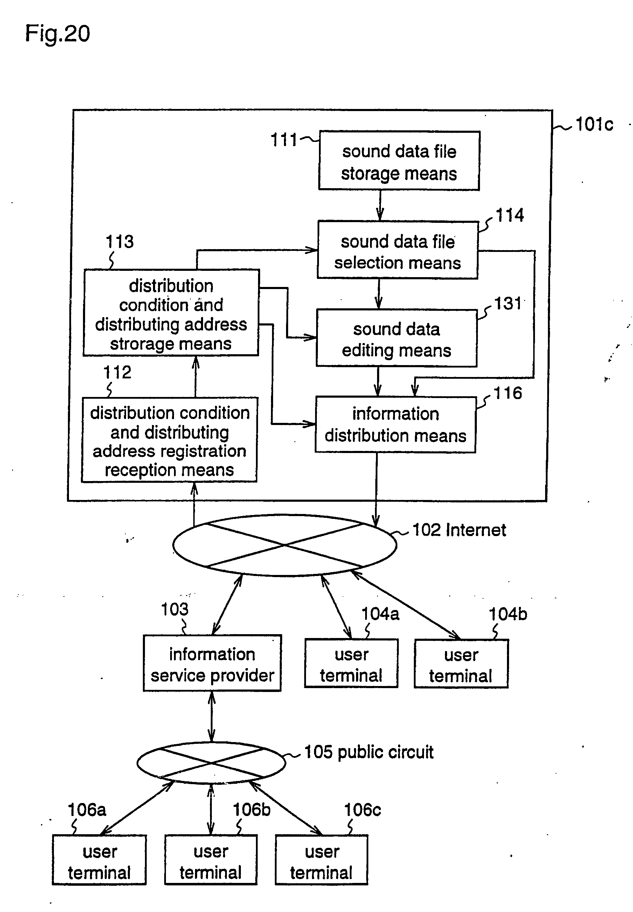

Figure 20 is a diagram illustrating the construction of an information distribution system according to a fourth embodiment of the present invention. In figure 20, the same reference numerals as those shown in figure 18 denote the same or corresponding parts. Numeral 101c denotes a server of a sound information service provider which constitutes the information distribution system according to the fourth embodiment. Numeral 131 denotes a sound data editing means which receives plural sound data files selected by the sound data file selection means 114, and creates editing information for editing and compositing these plural sound data files to create a single sound contents.

Next, an operation of the information distribution system according to the fourth embodiment will be described.

According to the information distribution system of the fourth embodiment, operations of storing the sound data file created by a sound data creator into the sound data file storage means 111, providing a radio magazine list to each user, selecting sound information by a user as well as registering a distribution condition and a distributing address with the server 101, and selecting the sound data file by the sound data file selection means 114 are the same as the operations of the information distribution system according to the second embodiment.

Hereinafter, a description will be given of the operation of the information distribution system according to the fourth embodiment with respect to a difference from the operation of the information distribution system according to the second embodiment.

The sound data file edition and composition process means 115 of the server 101 of the information distribution system according to the second or third embodiment actually edits and composites plural sound data files selected by the sound data file selection means 114 to create a single sound data file. However, the sound data editing means 131 of the server 101 of the information distribution system according to the fourth embodiment, instead of actually editing and compositing the plural sound data files selected by the sound data file selection means 114, receives the plural sound data files selected by the sound data file selection means 114, creates the editing information for editing and compositing the plural sound data files to create a single sound contents, on the basis of the contents of the received sound data files and additive information (reproduction order specification by the user, mixing specification or the like) which is included in the distribution condition stored in the distribution condition and transmitting address storage means 113, and transmits the editing information to the information distribution means 116. Further, the sound data file selection means 114 transmits the plural sound data files selected from the sound data file storage means 111 not only to the sound data editing means 131 but also to the information distribution means 116. The information distribution means 116 sequentially distributes the editing information received from the sound data editing means 131 as well as the plural sound data files received from the sound data file selection means 114, with one individual file being distributed at a time or several collective files being distributed at a time, to the user terminal by e-mail according to the information on the transmitting address which is stored in the distribution condition and transmitting address storage means 113. The user terminal side receives a single article of mail each time the e-mail is transmitted from the server 101, whereby a burden on a mail server or the like can be considerably reduced as compared with the case where the composite sound data file is distributed by a single article of e-mail as described for the second embodiment.

The user inputs the editing information and the plural sound data files which are included in the plural articles of e-mail received by the user terminal to a sound reproducer that is provided with a means for compositing the plural sound data files by employing the editing information, to reproduce the sound data files, whereby the user can listen to a sound program in which the sound information of his choice is edited into a single sound contents.

As described above, according to the information distribution system of the fourth embodiment, the server 101 of the sound information service provider creates the editing information for editing and compositing the plural sound data files including a sound data file which is real data of the sound information selected by the user, to create a single sound contents, and distributes the editing information and the plural sound data files to the user terminal dividedly in plural number of times, thereby realizing an information distribution system which enables the user to enjoy contents which is constituted by desired information with a simple reproducer, and has a small burden on a communication system.

### [Embodiment 5]

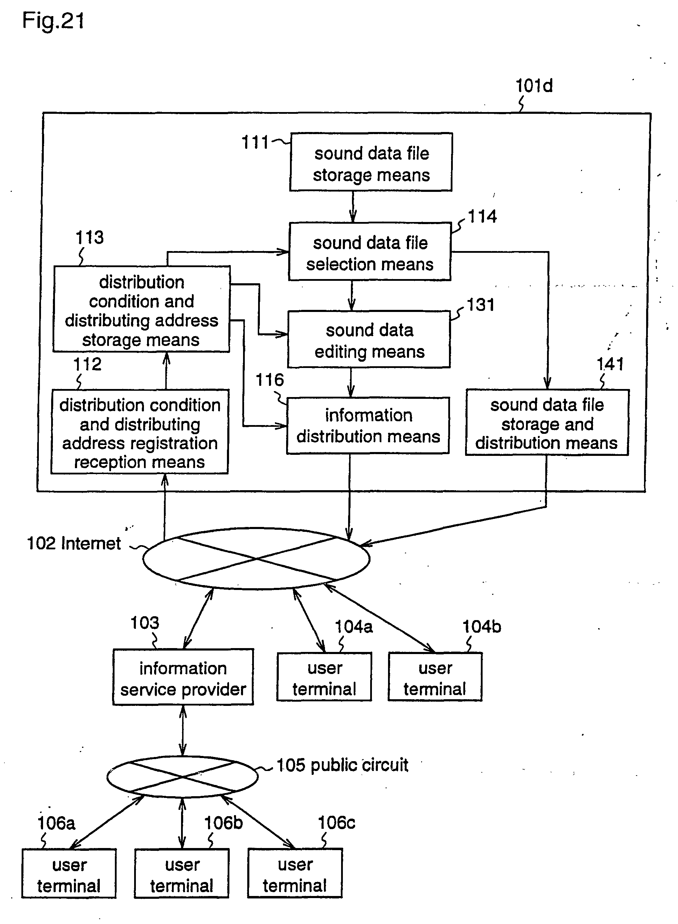

Figure 21 is a diagram illustrating the construction of an information distribution system according to a fifth embodiment of the present invention. In figure 21, the same reference numerals as those shown in figure 20 denote the same or corresponding parts. Numeral 101d denotes a server of a sound information service provider constituting the information distributing system according to the fifth embodiment. Numeral 141 denotes a sound data file storage and distribution means for storing plural sound data files which are selected from the sound data file storage means 111 by the sound data file selection means 114, and distributing the stored plural sound data files by an HTTP or an FTP according to an access from the user terminal.

Next, an operation of the information distribution system according to the fifth embodiment will be described.

According to the information distribution system of the fifth embodiment, operations of storing the sound data file created by a sound data creator into the sound data file storage means 111, providing a radio magazine list to each user, selecting sound information by a user as well as registering a distribution condition and a distributing address with the server 101, selecting the sound data file by the sound data file selection means 114, and creating the editing information by the sound data editing means 131 are the same as the operations of the information distribution system according to the fourth embodiment.

Hereinafter, a description will be given of the operation of the information distribution system according to the fifth embodiment with respect to a difference from the operation of the information distribution system according to the fourth embodiment.

According to the information distribution system of the fifth embodiment, the sound data file selection means 114 transmits the plural sound data files selected from the sound data file storage means 111 not only to the sound data editing means 131 but also to the sound data file storage and distribution means 141. The sound data file storage and distribution means 141 stores the plural sound data files received from the sound data file selection means 114 as well as transmits access information (link information) to access these stored plural sound data files to the information distribution means 116. The information distribution means 116 distributes the editing information received from the sound data editing means 131 as well as the access information (link information) received from the sound data file storage and distribution means 141 to the user terminal by e-mail according to the information of the transmitting address stored in the system distribution condition and transmitting address storage means 113. In the fifth embodiment, since the information distributed by e-mail is only the editing information for editing and compositing the plural sound data files to create a single sound contents, and the access information (link information) to access the plural sound data files, a burden on a mail server or the like is considerably reduced as compared with the case where the composite sound data file is distributed by e-mail as described for the second embodiment.

The user accesses the sound data file storage and distribution means 141 of the server 101 according to the access information (link information) which is included in the e-mail received by the user terminal, and downloads the plural sound data files stored in the sound data file storage and distribution means 141 via the Internet 102. Then, the user inputs the editing information included in the e-mail and the plural sound data files downloaded from the sound data file storage and distribution means 141 to a sound reproducer which is provided with a means for compositing the plural sound data files by employing the editing information, to reproduce the sound data files, whereby the user can listen to a sound program in which the sound information of his choice is edited into a single sound contents.

As described above, according to the information distribution system of the fifth embodiment, the server 101 of the sound information service provider creates the editing information for editing and compositing the plural sound data files including a sound data file which is real data of the sound information selected by the user, to create a single sound contents, and distributes the editing information and the access information to access the plural sound data files to the user terminal, thereby realizing an information distribution system which enables the user to enjoy contents constituted by desired information with a simple reproducer, and has a small burden on a communication system.

### [Embodiment 6]

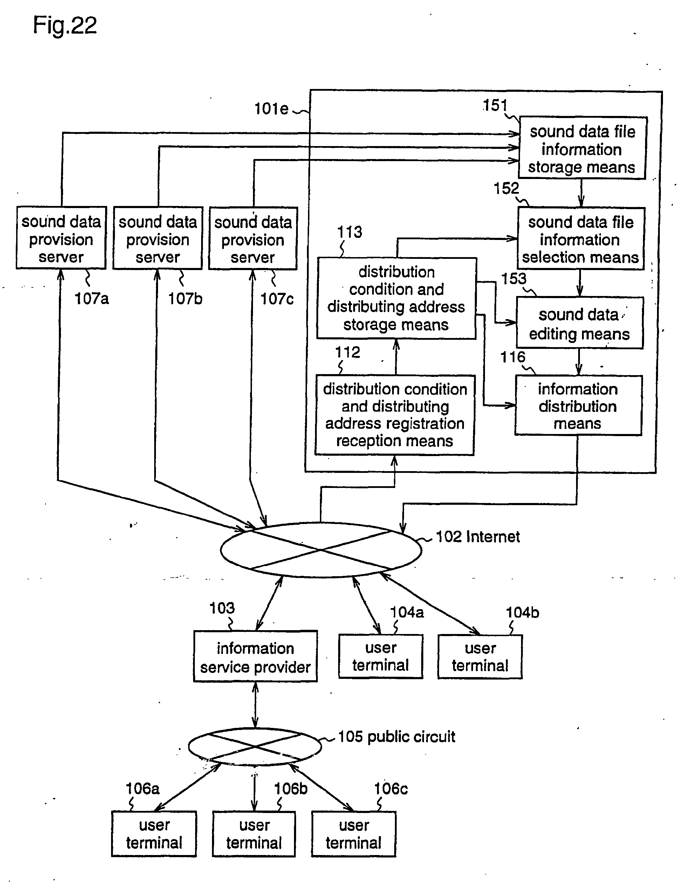

Figure 22 is a diagram illustrating the construction of an information distribution system according to a sixth embodiment of the present invention. In figure 22, the same reference numerals as those shown in figure 18 denote the same or corresponding parts. Numeral 101e denotes a server of a sound information service provider constituting the information distributing system according to the sixth embodiment. Numeral 151 denotes a sound data file information storage means for storing information relating to a sound data file which is created by a sound data creator. Numeral 152 denotes a sound data file information selection means for selecting information relating to plural sound data files including a sound data file which is real data of the sound information selected by the user, from the sound data file information storage means 151, on the basis of selection information included in the distribution condition stored in the distribution condition and transmitting address storage means 113. Numeral 153 denotes a sound data editing means which receives the information relating to the plural sound data files selected by the sound data file information selection means 152, and creates editing information for editing and compositing the plural sound data files to create a single sound contents by employing the information relating to the plural sound data files. Numerals 107a, 107b, and 107c denote sound data provision servers which are connected to the Internet 102 and provide sound data files created by the sound data creator by an HTTP or an FTP.

Next, an operation of the information distribution system according to the sixth embodiment will be described.

According to the information distribution system of the sixth embodiment, a sound data creator does not provide a sound information service provider with a sound data file itself but with information relating to the sound data file (sound data file information) by means of e-mail or the like, and the provided sound data file information is stored in the sound data file information storage means 151 of the server 101. The sound data file information provided from the sound data file creator to the sound information service provider can include access information to access the sound data file, as well as information indicating the kind of the sound information, and information required to create the editing information for editing and compositing the plural data files to create a single sound contents at the server 101, such as the volume of the data file and a reproduction time. The sound information service provider creates a list of available sound information (radio magazine list) for each user, on the basis of the sound data file information stored in the sound data file information storage means 151 of its own server 101, and provides this radio magazine list to the user by e-mail distribution to each user or by user's download of the list from a Web site of the sound information service provider. Operations of selecting the sound information by the user as well as registering a distribution condition and a distributing address with the server 101 are the same as the operations of the information distribution systems according to the second to fifth embodiments.

Next, in the server 101, the sound data file information selection means 152 obtains the distribution condition from the distribution condition and transmitting address storage means 113, selects information of the plural sound data files that includes a sound data file of the sound information selected by the user, from the sound data file information storage means 151, on the basis of the selection information included in the distribution condition, and transmits the selected information to the sound data editing means 153. The sound data editing means 153 creates the editing information for editing and compositing the plural sound data files to create a single sound contents, on the basis of the information of the plural sound data files received from the sound data file information selection means 152, and transmits the created editing information and the access information to access each sound data file which is included in each sound data file information, to the information distribution means 116.

The information distribution means 116 which has received the editing information and the access information to access each sound data file distributes these editing information and access information to the user terminal by e-mail according to the transmitting address stored in the distribution condition and transmitting address storage means 113. In the sixth embodiment, since the information distributed by e-mail is only the editing information for editing and compositing the plural sound data files to create a single sound contents, and the access information (link information) to access the plural sound data files, as is the case with the fifth embodiment, a burden on a mail server or the like is considerably reduced as compared with the case where the composite sound data file is distributed by e-mail as described for the second embodiment.

The user accesses the sound data provision server 107 according to the access information (link information) included in the e-mail received by the user terminal, and downloads the plural sound data files via the Internet 102. Then, the user inputs the editing information included in the e-mail and the downloaded plural sound data files to a sound reproducer which is provided with a means for compositing the plural sound data files by employing the editing information, to reproduce the sound data files, whereby the user can listen to a sound program in which the sound information of his choice is edited into a single sound contents.

As described above, according to the information distribution system of the sixth embodiment, the server 101 of the sound information service provider creates the editing information for editing and compositing the plural sound data files including a sound data file which is real data of the sound information selected by the user, to create a single sound contents, and distributes the editing information and the access information to access the plural sound data files to the user terminal, thereby realizing an information distribution system which enables the user to enjoy contents which is constituted by desired information with a simple reproducer, and has a small burden on a communication system. Further, only the sound data file information is stored in the server 101 of the sound information service provider stored, and the sound data file itself is distributed from each sound data provision server, whereby a volume of the data stored in the server 101 of the sound information service provider can be reduced.

### [Embodiment 7]

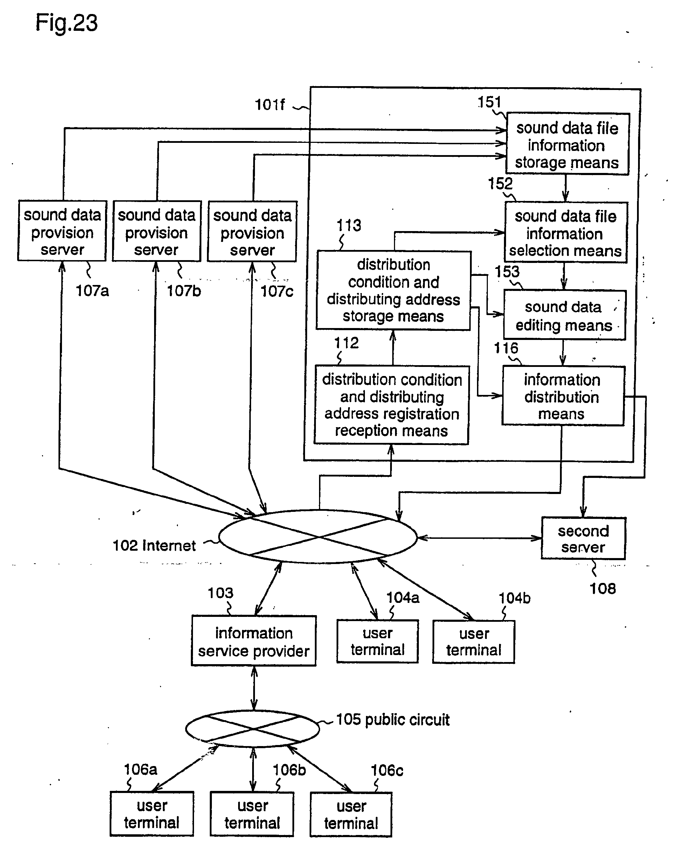

Figure 23 is a diagram illustrating the construction of an information distribution system according to a seventh embodiment of the present invention. In figure 23, the same reference numerals as those shown in figure 22 denote the same or corresponding parts. Numeral 101f denotes a server of a sound information service provider constituting the information distributing system according to the seventh embodiment. Numeral 108 denotes a second server which receives editing information for editing and compositing plural sound data files to create s single sound contents, and access information to access the plural sound data files, from the information distribution means 116 of the server 101f, accesses the sound data provision server 107 according to the access information (link information), downloads the plural sound data files via the Internet 102, creates a composite sound data file by compositing the downloaded plural sound data files by employing the editing information, and distributes the created composite sound data file according to an access from the user terminal.

Next, an operation of the information distribution system according to the seventh embodiment will be described.

According to the information distribution system of the seventh embodiment, operations of storing information relating to the sound data file which is provided from a sound data creator (sound data file information) into the sound data file information storage means 151, providing a radio magazine list to each user, selecting sound information by a user as well as registering a distribution condition and a distributing address with the server 101, selecting the sound data file information by the sound data file information selection means 152, and creating the editing information by the sound data editing means 153 are the same as the operations of the information distribution system according to the sixth embodiment.

Hereinafter, a description will be given of the operation of the information distribution system according to the seventh embodiment with respect to a difference from the operation of the information distribution system according to the sixth embodiment.

According to the information distribution system of the seventh embodiment, the information distribution system which has received the editing information and the access information to access each sound data file from the sound data editing means 153 transmits these editing information and access information to the second server 108, as well as distributes the access information (link information) to the second server 108 to the user terminal by e-mail according to the information of the transmitting address stored in the distribution condition and transmitting address storage means 113. In the seventh embodiment, since the information distributed by e-mail is only the access information (link information) to the second server 108, a burden on a mail server or the like can be considerably reduced as compared with the case where the composite sound data file is distributed by e-mail as described for the second embodiment.

The second server 108 accesses the sound data provision server 107 according to the access information to access each sound data file, which is received from the information distribution means 116 of the server 101f, and downloads the plural sound data files via the Internet 102. Then, the second server 108 composites the downloaded plural sound data files by employing the editing information, to create the composite sound data file, and distributes the created composite sound data file to the user terminal by an HTTP or FTP according to an access from the user terminal.

The user accesses the second server 108 by employing a communication software of a personal computer according to the access information (link information) to the second server 108 which is attached to the e-mail received by the user terminal, and downloads the composite sound data file created by the second server 108 via the Internet 102. The so-obtained composite sound data file is reproduced by a sound reproducer for reproducing the sound data file, whereby the user can listen to a sound program in which the sound information of his choice is edited into a single sound contents.

As described above, according to the information distribution system of the seventh embodiment, the server 101 of the sound information service provider creates the editing information for editing and compositing the plural sound data files that includes a sound data file which is real data of the sound information selected by the user, to create a single sound contents, transmits the editing information and the access information to access the plural sound data files to the second server, which obtains the plural sound data files by employing the access information and creates the composite sound data file in which the plural sound data files are edited and composited to create a single sound contents by employing the editing information, and distributes the access information to the second server to the user terminal, thereby realizing an information distribution system which enables the user to enjoy contents which is constituted by desired information with a simple reproducer, and has a small burden on a communication system. Further, only the sound data file information is stored in the server 101 of the sound information service provider, and the sound data file itself is distributed from each sound data provision server, whereby a volume of the data stored in the server 101 of the sound information service provider can be reduced.

### APPLICABILITY IN INDUSTRY

As described above, according to the present invention, it is possible to realize a system for distributing sound information, that enables a user to enjoy contents constituted by desired information with a simple reproducer, and a new information service that supplies the sound information through the Internet, which serves many uses particularly in a net service industry that is expanding dramatically in recent years.

## Claims

1. An information distribution system for distributing information from an information distribution device to an information reception device on the basis of selection information indicating one or more pieces of sound information which are selected from plural pieces of sound information, wherein
the information distribution device creates a composite sound data file which is obtained by editing and compositing plural sound data files including a sound data file which is real data of the selected sound information, to create a single sound contents, and distributes the composite sound data file to the information reception device.

2. An information distribution system for distributing information from an information distribution device to an information reception device on the basis of selection information indicating one or more pieces of sound information which are selected from plural pieces of sound information, wherein
the information distribution device creates a composite sound data file which is obtained by editing and compositing plural sound data files including a sound data file which is real data of the selected sound information, to create a single sound contents, as well as distributes access information for the composite sound data file to the information reception device.

3. An information distribution system for distributing information from an information distribution device to an information reception device on the basis of selection information indicating one or more pieces of sound information which are selected from plural pieces of sound information, wherein
the information distribution device creates editing information for editing and compositing plural sound data files including a sound data file which is real data of the selected sound information, to create a single sound contents, and distributes the editing information and the plural sound data files to the information reception device dividedly in plural number of times, and
the information reception device receives the editing information and the plural sound data files, and edits and composites the received plural sound data files on the basis of the received editing information to create one composite sound data file which is reproducible as a single sound contents.

4. An information distribution system for distributing information from an information distribution device to an information reception device on the basis of selection information indicating one or more pieces of sound information which are selected from plural pieces of sound information, wherein
the information distribution device creates editing information for editing and compositing plural sound data files including a sound data file which is real data of the selected sound information, to create a single sound contents, and distributes the editing information and access information for the plural sound data files to the information reception device, and
the information reception device receives the editing information and the access information, and edits and composites the plural sound data files which are obtained on the basis of the received access information, on the basis of the received editing information, to create one composite sound data file which is reproducible as a single sound contents.

5. The information distribution system as defined in any of Claims 1 to 4, wherein
the information distribution device is provided with a sound data file storage means for storing the plural sound data files which are real data of the plural pieces of sound information.

6. The information distribution system as defined in Claim 5, wherein
the sound data file storage means subjects the sound data file to a prescribed process and stores the processed sound data file.

7. The information distribution system as defined in Claim 5, wherein
the information distribution device distributes a sound data file having a compression format varying according to a distributing destination.

8. The information distribution system as defined in Claim 4, wherein
the information distribution device is provided with a sound data file information storage means for storing information relating to the plural sound data files which are real data of the plural pieces of sound information.

9. The information distribution system as defined in Claim 2, wherein
when receiving an access to the composite sound data file, the information distribution device transmits an audio signal which is obtained by reproducing the composite sound data file, to the information reception device as an access source.

10. An information distribution system for distributing information from an information distribution device to an information reception device on the basis of selection information indicating one or more pieces of sound information which are selected from plural pieces of sound information, wherein
the information distribution device creates editing information for editing and compositing plural sound data files including a sound data file which is real data of the selected sound information, to create a single sound contents, and transmits the editing information and access information for the plural sound data files to a second information distribution device that obtains the plural sound data files by employing the access information as well as creates a composite sound data file which is obtained by editing and compositing the plural sound data files to create a single sound contents by employing the editing information, as well as distributes access information to the second information distribution device, to the information reception device.

11. An information distribution device which distributes information to an information reception device on the basis of selection information indicating one or more pieces of sound information which are selected from plural pieces of sound information, comprising:
a sound data file edition and composition process means for creating a composite sound data file which is obtained by editing and compositing plural sound data files including a sound data file which is real data of the selected sound information, to create a single sound contents; and
an information distribution means for distributing the composite sound data file created by the sound data file edition and composition process means to the information reception device.

12. An information distribution device which distributes information to an information reception device on the basis of selection information indicating one or more pieces of sound information which are selected from plural pieces of sound information, comprising:
a sound data file edition and composition process means for creating a composite sound data file which is obtained by editing and compositing plural sound data files including a sound data file which is real data of the selected sound information, to create a single sound contents;
a composite sound data file storage means for storing the composite sound data file created by the sound data file edition and composition process means; and
an information distribution means for distributing access information for the composite sound data file stored in the sound data file storage means to the information reception device.

13. The information distribution device as defined in Claim 11 or 12, wherein
the sound data file edition and composition process means performs edition and composition so that reproduction of the composite sound data file takes a prescribed time.

14. The information distribution device as defined in Claim 11 or 12, wherein
the sound data file edition and composition process means arranges the plural sound data files including the sound data file which is real data of the selected sound information in a prescribed priority order to be edited and composited.

15. The information distribution device as defined in Claim 11 or 12, wherein
the sound data file edition and composition process means performs edition and composition so that the composite sound data file has a prescribed volume.

16. An information distribution device which distributes information to an information reception device on the basis of selection information indicating one or more pieces of sound information which are selected from plural pieces of sound information, comprising:
a sound data file editing means for creating editing information for editing and compositing plural sound data files including a sound data file which is real data of the selected sound information, to create a single sound contents; and
an information distribution means for distributing the information created by the sound data file editing means and the plural sound data files to the information reception device dividedly in plural number of times.

17. An information distribution device which distributes information to an information reception device on the basis of selection information indicating one or more pieces of sound information which are selected from plural pieces of sound information, comprising:
a sound data file editing means for creating editing information for editing and compositing plural sound data files including a sound data file which is real data of the selected sound information, to create a single sound contents; and
an information distribution means for distributing the information created by the sound data file editing means and access information for the plural sound data files to the information reception device.

18. A sound reproducer which reproduces a sound data file to output a sound, comprising:
a sound data file edition and composition process means for compositing plural sound data files on the basis of editing information for editing and compositing the plural sound data files to create a single sound contents, to create a composite sound data file which is obtained by editing and compositing the plural sound data files to create a single sound contents.

19. A sound information service provision method by which a sound information service provider supplies sound information to a user through a network, comprising:
a step in which the sound information service provider receives, from the user, selection information indicating sound information whose supply is desired by the user;
a step in which the sound information service provider supplies to the user the sound information corresponding to the selection information and advertisement information; and
a step in which the sound information service provider charges a client who requests supply the advertisement information an advertisement fee according to the number of times that the advertisement information is supplied.

20. A sound information service provision method by which a sound information service provider supplies sound information to a user with through a network, comprising:
a step in which the sound information service provider receives, from the user, selection information indicating sound information whose supply is desired by the user;
a step in which the sound information service provider supplies to the user the sound information corresponding to the selection information; and
a step in which the sound information service provider provides a profit to a sound information provider which has provided the sound information to the sound information service provider, according to the number of times that the sound information is supplied.

21. A sound information service provision method by which a sound information service provider supplies sound information to a user through a network, comprising:
a step in which the sound information service provider receives, from the user, selection information indicating sound information whose supply is desired by the user;
a step in which the sound information service provider supplies to the user the sound information corresponding to the selection information; and
a step in which the sound information service provider charges the user for the supply of the sound information.

22. A sound information service provision method by which a sound information service provider supplies sound information to a user from through a network, comprising:
a step in which the sound information service provider receives, from the user, selection information indicating sound information whose supply is desired by the user;
a step in which the sound information service provider supplies the sound information corresponding to the selection information to the user; and
a step in which the sound information service provider provides a charged sound information provider with a service of collecting a fee for a charged sound information from the user as substitute, when the sound information supplied to the user is the charged sound information which is provided from the charged sound information provider.

23. (Added) An information distribution system for distributing information from an information distribution device to an information reception device on the basis of selection information indicating one or more pieces of sound information which are selected from plural pieces of sound information, wherein
the information distribution device creates respective link information of plural sound data files including a sound data file which is real data of the selected sound information, to be a single piece of sound contents link information, and distributes the sound contents link information to the information reception device, and
the information reception device is provided with:
a downloading means for downloading the plural sound data files on the basis of the sound contents link information; and
a sound data file composition process means for compositing the plural sound data files which are downloaded by the downloading means on the basis of the sound contents link information.

24. (Added) An information distribution system for distributing information from an information distribution device to an information reception device on the basis of selection information indicating one or more pieces of sound information which are selected from plural pieces of sound information, wherein
the information distribution device creates respective link information of plural sound data files including a sound data file which is real data of the selected sound information, to be a single piece of sound contents link information, and distributes the sound contents link information to the information reception device by an electronic mail, and
the information reception device is provided with:
a downloading means for receiving the electronic mail including the sound contents link information to download the plural sound data files on the basis of the sound contents link information; and
a sound data file composition process means for compositing the plural sound data files which are downloaded by the downloading means on the basis of the sound contents link information.

25. (Added) An information distribution system for distributing information from an information distribution device to an information reception device on the basis of selection information indicating one or more pieces of sound information which are selected from plural pieces of sound information, wherein
the information distribution device creates a composite sound data file which is obtained by editing and compositing plural sound data files including a sound data file which is real data of the selected sound information to create a single sound contents, distributes the composite sound data file to the information reception device, and has a specific phone number to access the composite sound data file, and
the information reception device has a telephone function, and is connected to the specific phone number for the access of the information distribution device, thereby obtaining the composite sound data file as a sound of the telephone.

26. (Added) An information distribution device for distributing information to an information reception device on the basis of selection information indicating one or more pieces of sound information which are selected from plural pieces of sound information, comprising:
a sound data file edition and composition process means for creating a composite sound data file which is obtained by editing and compositing plural sound data files including a sound data file which is real data of the selected sound information, to create a single sound contents;
a composite sound data file storage means for storing the composite sound data file created by the sound data file edition and composition process means;
an information distribution means for distributing access information for the composite sound data file stored in the sound data file storage means to the information reception device;
a distribution condition registration reception means for reception registration of a distribution condition and an address to which distribution is performed under the distribution condition; and
a distribution condition and distributing address storage means for storing the distribution condition and the distributing address received by the distribution condition registration reception means.

27. (Added) The information distribution device as defined in Claim 26, wherein
when a total of reproduction times for the whole selected sound information is longer than a reproduction time desired by a user, which is set in the distribution condition received and registered by the distribution condition and distributing address registration reception means, a reproduction speed is set to be slightly higher within a range in which there is no impediment to listening to the selected sound information, whereby the sound data file edition and composition means performs editing and composition to create the composite sound data file so that the reproduction time for the whole sound information to be distributed is equal to or shorter than the reproduction time desired by the user.

28. (Added) The information distribution device as defined in Claim 26, wherein
when a total of reproduction times for the whole selected sound information is shorter than a reproduction time desired by a user, which is set in the distribution condition received and registered by the distribution condition and distributing address registration reception means, recommended sound information is inserted, whereby the sound data file edition and composition means performs edition and composition to create the composite sound data file so as to have the reproduction time desired by the user.

29. (Added) The information distribution device as defined in Claim 28, wherein
the recommended sound information is provided from a sound information service provider in the form of data other than sound data, and is turned into sounds by the sound data file edition and composition means.

30. (Added) The information distribution device as defined in Claim 26, wherein
the recommended sound information is sound information and traffic information relating to a neighboring facility according to a place and a time which are set by the user in the distribution condition.

31. (Added) An information distribution device which is employed in the information distribution system as defined in any of Claims 1 to 11 and 23 to 25.

32. (Added) An information reception device which is employed in the information distribution system as defined in any of Claims 1 to 11 and 23 to 25.
